# EUROPÄISCHE PATENTSCHRIFT

(11) **EP 3 055 584 B1**
(45) Veröffentlichungstag und Bekanntmachung des Hinweises auf die Patenterteilung: **12.12.2018**
(21) Anmeldenummer: 14784034.2
(22) Anmeldetag: 10.10.2014
(51) Int. Cl.: F16D 55/226

(54) **BREMSSATTEL FÜR EINE SCHEIBENBREMSE**
BRAKE CALIPER FOR A DISK BRAKE
ÉTRIER DE FREIN POUR FREIN À DISQUE

(30) Priorität: 11.10.2013 DE 102013111258
(43) Veröffentlichungstag der Anmeldung: 17.08.2016
(73) Patentinhaber: KNORR-BREMSE Systeme für Nutzfahrzeuge GmbH, 80809 München (DE)
(72) Erfinder: EBERT, Jörg, 50858 Köln (DE)
(86) Internationale Anmeldenummer: PCT/EP2014/071715
(87) Internationale Veröffentlichungsnummer: WO 2015/052306

(56) Entgegenhaltungen:
- EP-A1- 0 108 680
- EP-A1- 2 644 928
- WO-A1-02/059494
- US-A- 3 933 226

## Beschreibung

Die vorliegende Erfindung betrifft einen Bremssattel nach Anspruch 1.

Derartige Bremssättel für Scheibenbremsen werden üblicherweise einstückig durch ein Urformverfahren hergestellt, vorzugsweise im Sandgießverfahren, wobei als Werkstoff vorzugsweise Gusseisen mit Kugelgraphit bzw. Sphäroguss eingesetzt wird. Das so entstandene Gussrohteil wird anschließend spanend fertig bearbeitet, so dass ein einbaubarer Bremssattel entsteht. Solche einstückigen Bremssättel aus Sphäroguss nach dem Stand der Technik haben sich grundsätzlich bewährt, weisen aber einige Nachteile auf, die sich insbesondere im Anwendungsbereich der schweren Nutzfahrzeuge negativ auswirken.

Nachteilig sind insbesondere die durch den hohen Aufwand zum Erschmelzen des Gussmaterials, dem Entsanden, gezielten Abkühlens nach dem Gussprozess, Putzen des des Rohgussteils entstehenden hohen Prozeßkosten des Gussprozesses, die nur eine geringe Stückzahlabhängigkeit aufweisen.

Ein sich durch das Fertigungsverfahren "Gießen mit verlorener Form" prinzipbedingt ergebener Nachteil, liegt in dem zwangsläufig benötigten Gießmodell, so dass auf Grund der Kostenstruktur eines gegossenen Bremssattels eine Grenzstückzahl ergibt, ab der ein gegossener Bremssattel wirtschaftlich herstellbar ist. Kosten entstehen zudem durch das Laufsystem, welches zwar wieder eingeschmolzen wird, aber auch bezahlt werden muss

Darüber hinaus unterliegt ein Gießmodell durch die permanente Beaufschlagung des Gießmodells mit Formsand einem Abrasivverschleiß, so dass es nach einer bestimmten Anzahl von Formvorgängen gegen ein neues Gießmodell ersetzt werden muss. Die Kostenstruktur eines gegossenen Bremssattels wird dadurch weiter belastet.

Weiterhin erfordert ein gegossener Bremssattel fertigungsprinzipbedingt Mindestwandstärken, um prozesssicher gießbar zu sein. Dies führt insbesondere in gering belasteten Bereichen dazu, dass der Werkstoff unter Festigkeitsaspekten nicht vollständig ausgenutzt wird, so dass dadurch Kosten- und Gewichtsnachteile entstehen.

Ferner bedarf es eines Zerspanungsprozesses, um aus einem Gussrohteil ein einbaufertigen Bremssattel zu erzeugen.

Es besteht also die Notwendigkeit, einen Bremssattel insbesondere für Fahrzeugbremsen, insbesondere Nutzfahrzeugbremsen, bereitzustellen, der die vorgenannten Nachteile wenigstens teilweise überwindet.

Die EP 2 644 928 B1 offenbart eine Scheibenbremse für ein Nutzfahrzeug mit einem Bremssattel und einer darin angeordneten Zuspannvorrichtung. Der Bremssattel besteht aus einem die Zuspanneinrichtung aufnehmenden separaten Gehäuse und einem umlaufend geschlossenen Rahmen, an dem das Gehäuse befestigt und form- und/oder stoffschlüssig mit dem Gehäuse verbunden.

Die WO 03/023244 A1 offenbart, ebenso wie die EP1 319 858 A2 einen zweiteilig ausgebildeten Bremssattel. Als weitere Dokumente mit einer Bremssattelkonstruktion sind die DE 92 08 699 U1, die DE 92 06 052 U1, die US 2011/247905 A1 und die US 2005/0098395 A1 zu nennen.

Aus der EP 0 108 680 A1 ist ein Bremssattel bekannt, der aus zwei umgeformten Bauteilen aufgebaut ist. Das obere und das untere Bauteil des Bremssattels weisen dabei jeweils zentrale Öffnungen auf. Das obere und das untere Bauteil ist dazu jeweils aus einem Blech oder Band so hergestellt, das beide jeweils einen zentralen Halbzylinder aufweisen. Mehrere kleinere Halbzylinder sind jeweils vom zentralen Halbzylinder beabstandet jeweils in das obere und untere Bauteil eingeformt. Durch Fügen der beiden Bauteile werden die eingeformten Halbzylinder jeweils Vollzylindern und können andere Bauteile , wie z.B. den in diesem Fall hydraulisch wirkenden Zuspannaktuator bzw. Führungsstifte zur Führung der Bewegung des Sattels in axialer Richtung relativ zur Bremsscheibe aufgenommen werden.

Nachteilig an der Ausführung nach EP 0 108 680 A1 ist die mangelnde Präzision der geschaffenen Aufnahme insbesondere für Führungselemente.

Darüber hinaus können durch die gewählte Bauweise der wesentlichen Strukturbauteile die Abschnitte mit hoher mechanischen Belastung nicht oder nur unzureichend belastungsgerecht gestaltet werden. Dadurch ist die in der EP 0 108 680 A1 gewählte Bauweise insbesondere für eine Anwendung im Nutzfahrzeugbereich nur eingeschränkt bzw. gar nicht brauchbar.

Der Erfindung liegt daher die Aufgabe zu Grunde, ein Verfahren zur Herstellung eines Bremssattels anzugeben, sowie einen Bremssattel zu schaffen, der die vorgenannten Nachteile vermeidet und kostengünstig, prozesssicher und damit wirtschaftlich hergestellt werden kann.

Die Erfindung löst die Aufgabe dadurch , dass die Einhausung eine Bodenplatte, eine Zwischenplatte , eine die Bodenplatte und die Zwischenplatte verbindende Gehäuseschale sowie eine Gehäuseabdeckung aufweist, wobei die Zwischenplatte aus einem Flachmaterialhalbzeug zugeschnitten ist und der Sattelrahmen aus einem Blech geschnitten und umgeformt ist und dass die Gehäuseabdeckung einstückig mit dem Sattelrahmen ausgebildet ist.

Durch die Erfindung wird also ein Bremssattel geschaffen, der aus durch aus Trennprozessen bzw. Trenn- und Umformprozessen bzw. aus Trenn- und Fügeprozessen geschaffene Bauteile aufweist, wobei der einstückige Sattelrahmen ein Gehäuseoberteil ausprägt, das Teil der Einhausung der Zuspannmechanik der Scheibenbremse ist.

Ein Vorteil eines Bremssattels, der besonders bevorzugt aus mehreren Bauteilen, die entweder durch ein Trennverfahren oder durch eine Kombination eines Trennverfahrens und eines Umformverfahrens hergestellt sind, zusammengefügt wird, ist die Möglichkeit, Bereiche mit höherer bzw. geringerer Belastung hinsichtlich der Wandstärke sowie der Auswahl des Werkstoffs belastungsgerecht auslegen zu können, so dass das der Werkstoff des jeweiligen Bauteils optimal ausgenutzt wird. Dies wird z.B. durch die Verwendung eines Tailored Blank als Zuschnitt realisiert. Durch diese Flexibilität in der Werkstoffauswahl ergeben sich erhebliche Vorteile in der Gewichtsbilanz und in der Kostenstruktur eines gefügten Bremssattels.

Durch die Flexibilität hinsichtlich der Werkstoffwahl können auch grundsätzlich Werkstoffe mit einer höherer Festigkeit und Streckgrenze gewählt werden, wodurch sich die Kostenstruktur und vor allem das Gewicht des Bremssattels weiter optimieren lässt. Wobei insbesondere ein niedriges Gewicht -neben einer optimalen Kostenstruktur- ein im Fahrzeugbereich dominierendes Entwicklungsziel ist, da durch eine höhere Nutzlast für das Gesamtfahrzeug möglich ist.

Durch die Gestaltung des Bremssattels aus Umform-Bauteilen ergibt sich eine höhere Anzahl von in Frage kommenden Zulieferern als bei einem vergleichbaren Bremssattel aus Sphäroguss.

Ein weiterer, wesentlicher Kostenvorteil für einen erfindungsgemäßen Bremssattel ergibt sich durch den Wegfall eines kostenintensiven Gießmodells. Bauartbedingt entfällt bei einem erfindungsgemäßen Bremssattel -zumindest teilweise- auch die spanende Nachbearbeitung eines Rohteils, wodurch sich weitere Kostenvorteile ergeben.

Darüber hinaus entfällt bei einem erfindungsgemäßen Bremssattel auch die spanende Nachbearbeitung eines Rohteils, wodurch sich weitere Kostenvorteile ergeben. Weitere vorteilhafte Ausführungen des erfindungsgemäßen Bremssattels sind den Unteransprüchen zu entnehmen.

Ausführungsbeispiele eines erfindungsgemäßen Bremssattels sind in den Zeichnungen dargestellt und werden im Folgenden näher beschrieben.

Es zeigen:
- Figur 1: eine räumliche Ansicht einer Ausführungsvariante eines erfindungsgemäßen Bremssattels;
- Figur 2: eine räumliche Ansicht eines Sattelrahmens einer Ausführungsvariante eines erfindungsgemäßen Bremssattels;
- Figur 3: eine räumliche Ansicht eines Gehäuses für eine Zuspannmechanik einer Ausführungsvariante eines erfindungsgemäßen Bremssattels;
- Figur 4: eine räumliche Ansicht einer Zwischenplatte einer Ausführungsvariante eines erfindungsgemäßen Bremssattels.
- Figur 5: eine räumliche Ansicht einer Bodenplatte mit Lagerböcken einer Ausführungsvariante eines erfindungsgemäßen Bremssattels

Im Folgenden wird ein Bremssattel 1 einer Schiebesattel-Scheibenbremse beschrieben. Dies ist rein beispielhaft zu verstehen. Ein erfindungsgemäßer Bremssattel 1, ist demzufolge auch für eine Festsattel-Scheibenbremse oder für eine Schwebesattel-Scheibenbremse einsetzbar, wobei bremsenspezifische Ausführungseigenschaften des Bremssattels 1 der jeweiligen Bauweise der Scheibenbremse entsprechend angepasst werden.

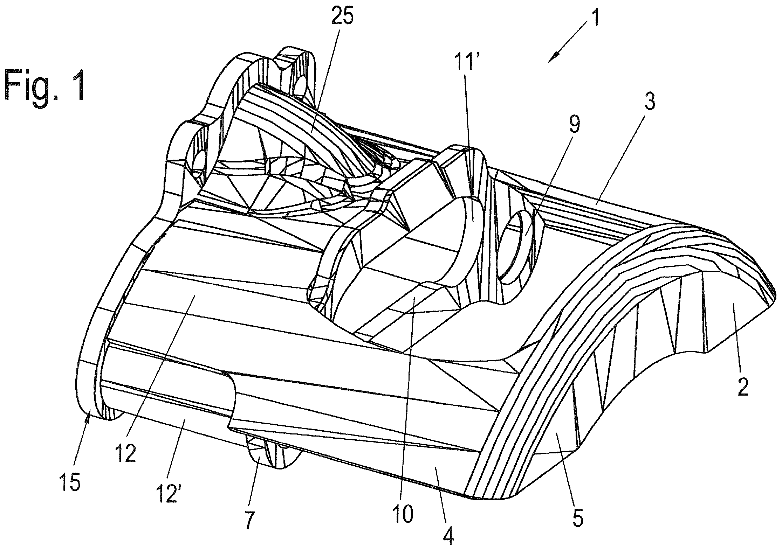

In Fig. 1 ist ein erfindungsgemäßer Bremssattel 1 einer Schiebesattel - Scheibenbremse räumlich dargestellt. Der Bremssattel 1 weist einen bügelförmigen Sattelrahmen 2 auf. Der Sattelrahmen 2 umgreift im eingebauten Zustand des Bremssattels 1 eine Bremsscheibe (nicht dargestellt). Der Sattelrahmen 2 weist zwei im Wesentlichen parallel zueinander und zur Bremsscheibenachse liegenden Zugstreben 3, 4 auf. Ferner weist der Sattelrahmen 2 einen Sattelrücken 5 auf. Der Sattelrahmen 2 ist aus einem Flachmaterialzuschnitt hergestellt, der zum Sattelrahmen 2 umgeformt ist.

Auf der sattelrahmenabgewandten Seite der Zwischenplatte 7 bildet der Sattelrahmen ein Gehäuseoberteilabschnitt 12 aus, das gemeinsam mit einer Gehäuseschale 12' im montierten Zustand der Scheibenbremse eine Zuspannmechanik der Scheibenbremse aufnimmt. Die Zugstreben 3, 4 des Sattelrahmens 2 überdecken eine Zwischenplatte 7 und stoßen an eine Bodenplatte 15. Der Sattelrahmen 2 bildet ferner eine Gehäuseabdeckung 12 aus, der gemeinsam mit einer Gehäuseschale 12' im montierten Zustand der Scheibenbremse eine Zuspannmechanik der Scheibenbremse aufnimmt. Die Gehäuseabdeckung 12 weist im Wesentlichen einen Querschnitt auf, der der Grundgeometrie der Zwischenplatte 7 folgt. Die Gehäuseabdeckung 12 stößt auf der der sattelrahmenabgewandten Seite der Zwischenplatte 7 teilweise an die Zwischenplatte 7 an und ist durch ein Fügeverfahren, vorzugsweise durch ein stoffschlüssiges Fügeverfahren, besonders bevorzugt durch Laserschweißen an ihr befestigt.

Der Sattelrahmen 2 weist im Bereich der Gehäuseabdeckung 12 einen domartigen Gehäuseabschnitt 25 auf. Die Zwischenplatte 7 sowie die Bodenplatte 15 sind an dem Sattelrahmen 2 jeweils durch ein Fügeverfahren, vorzugsweise durch ein stoffschlüssiges Fügeverfahren, besonders bevorzugt durch Laserschweißen befestigt.

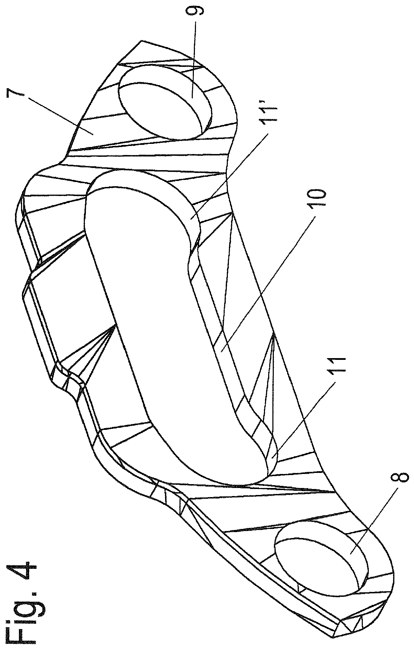

Die Zwischenplatte 7 weist zwei Bohrungen 8, 9 auf. Darüber hinaus weist die Zwischenplatte 7 einen symmetrischen Durchbruch auf, der durch eine Verbindung jeweils zwischen einer zentralen Öffnung 10 und zwei symmetrisch zur Symmetrieachse liegenden Bohrungen 11, 11' geschaffen wird. Die beiden Bohrungen 11, 11' nehmen im montierten Zustand der Scheibenbremse Druckelemente einer Zuspannmechanik auf, während die Öffnung 10 weitere Funktionselemente der Zuspannmechanik wie z.B. ein Nachstellsystem für Bremsbeläge zur Verschleißkompensation aufnimmt. Die Gehäuseabdeckung 12 umschließt auch den Bereich der gedanklichen zylindrischen Fortführung der Bohrungen 8, 9 auf der sattelrahmenabgewandten Seite der Zwischenplatte 7. Die Zwischenplatte 7 ist aus einem Flachmaterialzuschnitt hergestellt. Die Zwischenplatte 7 ist auch in Fig. 4 dargestellt.

Auf der zwischenplattenabgewandten Seite der Gehäuseabdeckung 12 stößt die Gehäuseabdeckung 12 des Sattelrahmens 2 an eine Bodenplatte 15 an und ist durch ein Fügeverfahren, vorzugsweise durch ein stoffschlüssiges Fügeverfahren, besonders bevorzugt durch Laserschweißen an der Bodenplatte 15 befestigt. Die Bodenplatte 15 weist eine auf der Symmetrielinie der Bodenplatte 15 befindliche Bohrung 16 auf, die im montierten Zustand der Scheibenbremse von einer Kolbenstange oder eines Betätigungsgestänges eines Bremszylinders durchgriffen wird. Die Bodenplatte 15 weist weiterhin zwei Bohrungen 17, 18 auf, die symmetrisch zur Symmetrielinie angeordnet sind. Darüber hinaus weist die Bodenplatte 15 mehrere Bohrungen 19 mit relativ kleinem Durchmesser auf.

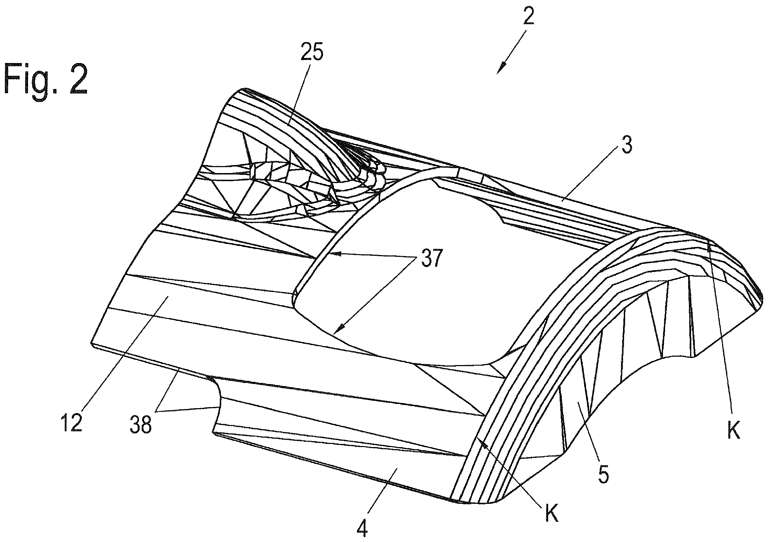

In Fig. 2 ist der Sattelrahmen 2 gut erkennbar dargestellt. Der Sattelrahmen 2 ist ein einstückiges, symmetrisches Bauteil. Der Sattelrücken 5 weist eine im Wesentlichen kreisringsegmentartige Grundgeometrie auf. Diese Grundgeometrie schließt sich orthogonal an die gewölbte Geometrie des Sattelrahmens 2 im Bereich des Bremsscheibenfensters 37 an und wird durch einen Umformvorgang oder mehrere Umformvorgänge erzeugt. Die Geometrie der beiden Zugstreben 3, 4 folgt der kreissegmentartigen Grundgeometrie der Zwischenplatte 7. Insofern weisen beide Zugstreben 3, 4 sowie die Gehäuseabdeckung 12 eine Krümmung "K" auf. Durch die Krümmung der Zugstreben 3, 4 wird deren Biegesteifigkeit gegenüber einer Ausführung ohne Krümmung "K" in vorteilhafter Weise erhöht. Der Sattelrahmen 2 weist ferner jeweils eine Aussparung 38, 39 auf. Durch die Aussparung 38, 39 wird eine Zugänglichkeit zur Gehäuseschale 12' geschaffen, so dass die Gehäuseschale 12' mit dem Sattelrahmen 2 mit der Gehäuseabdeckung 12 zu einem Gehäuse verbunden werden kann. Der Sattelrahmen 2 ist vorzugsweise durch Tiefziehen oder Formstanzen eines Flachmaterialzuschnitts hergestellt. Durch den Umformprozess bzw. die Umformprozesse kann sich eine Kaltverfestigung im Sattelrahmen 2 ergeben, die sich festigkeitssteigernd auswirken kann.

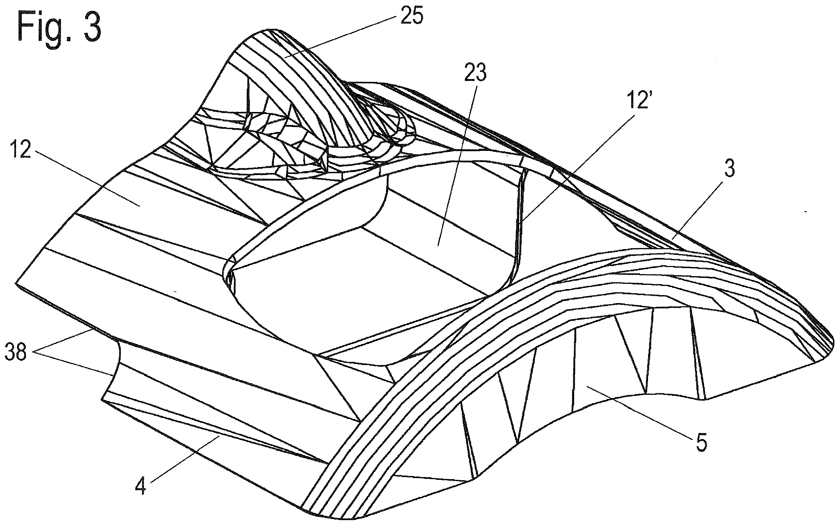

In Fig. 3 ist der Sattelrahmen 2 mit der Gehäuseabdeckung 12 dargestellt. Die Gehäuseabdeckung 12 des Sattelrahmens 2 sowie die Gehäuseschale 12' bilden eine Einhausung, die die Zuspannmechanik der Scheibenbremse aufnimmt und jeweils stirnseitig von der Bodenplatte 15 und von der Zwischenplatte 7 (jeweils hier nicht dargestellt) abgeschlossen wird.

Der domartige Gehäuseabschnitt 25 haust eine Kolbenstange eines Bremszylinders, sowie einen Hebelarm der Zuspannmechanik der Scheibenbremse ein (jeweils nicht dargestellt) und folgt dem Schwenkbereich des Hebelarms der Zuspannmechanik der Scheibenbremse.

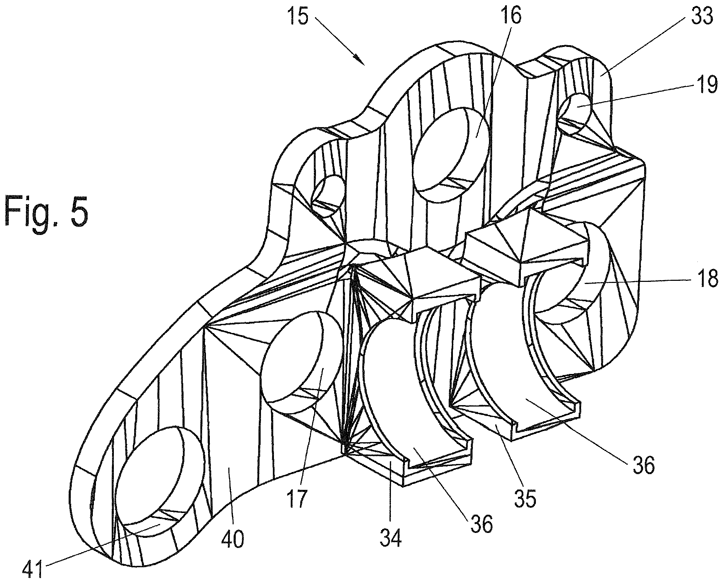

In Fig. 5 ist die Bodenplatte 15 dargestellt. Die Bodenplatte 15 ist ein im Wesentlichen symmetrisches Bauteil und weist eine Grundplatte33 sowie zwei Lagerböcke 34, 35 auf. Nicht symmetrisch ist ein Plattenabschnitt 40, der eine Bohrung 41 aufweist, die zum Festlager eines Führungselementes (nicht dargestellt) gehört.

Die Lagerböcke 34, 35 sind jeweils Teil eines geteilten Lagergehäuses und nehmen die Lager eines Hebels oder einer Welle auf, auf die ein Hebel wirkt (jeweils nicht dargestellt). Die Welle und/oder der Hebel sind jeweils Teil der Zuspannmechanik der Scheibenbremse. Zur Aufnahme der Lager weisen die Lagerböcke 34, 35 jeweils einen Lagersitz 36 auf. Der Lagersitz 36 ist jeweils halbzylinderförmig in den Lagerbock 34, 35 eingearbeitet. Die Lagerböcke 34, 35 sind durch ein Fügeverfahren, vorzugsweise durch ein stoffschlüssiges Fügeverfahren, besonders bevorzugt durch Laserschweißen an der Grundplatte33 befestigt. Die Lagerböcke 34, 35 sind aus einem gut schweißbaren Werkstoff wie z.B. Stahl durch einen Zerspanungsprozess hergestellt. Alternativ können die Lagerböcke 34, 35 auch durch ein Urformverfahren, wie z.B. Gießen hergestellt sein. Als Werkstoff kommt in einem solchen Fall z.B. Stahlguss oder schweißbarer weißer Temperguss in Frage.

Die jeweiligen Zuschnitte für den Sattelrahmen 2, die Zwischenplatte 7, das Gehäuse 12, bzw. die Gehäuseschale 12' und die Bodenplatte 15 bzw. die Grundplatte33 werden -sofern eine werkzeuglose Fertigung vorgesehen ist- durch geeignete Trennverfahren, wie z.B. Laser-, Plasma- oder Brennschneiden oder Stanzen oder durch eine Kombination daraus hergestellt. Als Halbzeug können alle handelsüblichen Blechhalbzeuge, wie z.B. Tafeln, Platinen, Coils oder Bänder oder Tailored Blanks zum Einsatz kommen.

Für die jeweiligen Zuschnitte kommt als Werkstoff Stahl, vorzugsweise eine gut schweißbare Stahlsorte zum Einsatz. Sofern eine werkzeuggebundene Fertigung für die jeweiligen Zuschnitte vorgesehen ist, wird die jeweiligen Zuschnitte vorzugsweise in einem Folgeschneidwerkzeug hergestellt.

Je nach benötigter Menge kann auch eine Fertigung des gesamten Sattelrahmens 2 bzw. des gesamten Gehäuses 12 bzw. der Gehäuseschale 12' in einem Folgeverbundwerkzeug wirtschaftlich sein, bei dem der jeweilige Zuschnitt inkl. der Umformvorgänge in einem Werkzeug erfolgt, so dass je Pressenhub ein Sattelrahmen 2 bzw. eine Gehäuseschale 12' aus dem Werkzeug fällt.

Die Gehäuseschale 12' kann alternativ auch durch ein Walzprofilierverfahren hergestellt sein. In dem Fall wird ein entsprechendes Profil durch Walzprofilieren eines Coils oder eines Bandes oder eines Tailored Blanks hergestellt und anschließend auf die erforderliche Länge der Gehäuseschale 12' abgelängt.

Im Falle einer werkzeuggebundenen Fertigung der jeweiligen Zuschnitte bzw. des Sattelrahmens 2 bzw. der Gehäuseschale 12' kommen vorzugsweise Tafeln, Platinen, Coils oder Bänder oder Tailored Blanks als Halbzeug zum Einsatz, wobei jeweils als Werkstoff Stahl, vorzugsweise eine gut schweißbare Stahlsorte vorgesehen ist.

Durch die Wahl von vorteilhaften Schweißverfahren, besonders bevorzugt Laserschweißen, lässt sich der Schweißverzug auf ein Minimum beschränken, sodass übliche Maßnahmen zum Entgegenwirken bzw. zum Abbau von Schweißspannungen, wie z.B. einer vorgegebenen Nahtfolge oder Spannungsarmglühen des gefügten Bauteils nicht erforderlich sind. Dies beeinflusst die Kostenstruktur eines erfindungsgemäßen Bremssattels 1 ebenfalls positiv.

Ein erfindungsgemäßer Bremssattel 1 wird also dadurch gebildet, in dem in einem ersten Verfahrensschritt eines oder mehrerer Flachmaterialhalbzeuge bereitgestellt wird / werden.

In einem weiteren Verfahrensschritt wird die Zwischenplatte 7 aus einem Flachmaterialhalbzeug ausgeschnitten.

In einem anschließenden Verfahrensschritt wird die Grundplatte33 aus einem Flachmaterialhalbzeug ausgeschnitten und mit dem wenigstens einem Lagerbock 33, 34 zu der Bodenplatte 15 gefügt.

In einem folgenden Verfahrensschritt wird ein Zuschnitt der Gehäuseschale 12' aus einem Flachmaterialhalbzeug ausgeschnitten und zu der Gehäuseschale (12') umgeformt.

In einem weiteren Verfahrensschritt wird ein Zuschnitts des Sattelrahmens 2 aus einem Flachmaterialhalbzeug ausgeschnitten und zu dem Sattelrahmen 2 umgeformt.

In einem abschließenden Verfahrensschritt wird die Zwischenplatte 7, die Bodenplatte 15, die Gehäuseschale 12' sowie der Sattelrahmens 2 zu dem Bremssattel 1 gefügt.

Alternativ wird die Gehäuseschale 12' aus einem Flachmaterialhalbzeug durch einen Walzprofilierungsprozess umgeformt und anschließend zu einer Gehäuseschale 12' zugeschnitten.

### Bezugszeichenliste

- 1: Bremssattel
- 2: Sattelrahmen
- 3: Zugstrebe
- 4: Zugstrebe
- 5: Sattelrücken

- 7: Zwischenplatte
- 8: Bohrung
- 9: Bohrung
- 10: Bohrung
- 11: Bohrung
- 12: Gehäuseabdeckung
- 12': Gehäuseschale

- 15: Bodenplatte
- 16: Bohrung
- 17: Bohrung
- 18: Bohrung
- 19: Bohrung

- 33: Grundplatte
- 34: Lagerbock
- 35: Lagerbock
- 36: Lagersitz
- 37: Bremsscheibenfenster
- 38: Aussparung
- 39: Aussparung
- 40: Plattenabschnitt
- 41: Bohrung

## Patentansprüche

1. Bremssattel (1) für eine Scheibenbremse, der einen Sattelrahmen (2) aufweist, der dazu ausgelegt ist, einen Rand einer Bremsscheibe zu übergreifen und der ein Einhausung zur Aufnahme einer Zuspannmechanik zum Zuspannen der Scheibenbremse aufweist, **dadurch gekennzeichnet,**
a) **dass** die Einhausung eine Bodenplatte (15), eine Zwischenplatte (7), eine die Bodenplatte (15) und die Zwischenplatte (7) verbindende Gehäuseschale (12") sowie eine Gehäuseabdeckung (12) aufweist,
wobei die Zwischenplatte (7) aus einem Flachmaterialhalbzeug zugeschnitten ist und wobei
b) der Sattelrahmen (2) aus einem Blech geschnitten und umgeformt ist und dass die Gehäuseabdeckung (12) einstückig mit dem Sattelrahmen (2) ausgebildet ist.

2. Bremssattel (1) nach Anspruch 1, **dadurch gekennzeichnet, dass** die Bodenplatte (15), die Zwischenplatte (7) und die Gehäuseschale (12') sowie der Sattelrahmen (2) mit der Gehäuseabdeckung (12) jeweils als separate Teile ausgestaltet sind, die durch einen Fügeprozess miteinander gefügt sind.

3. Bremssattel (1) nach Anspruch 1 oder 2, **dadurch gekennzeichnet, dass** die Zwischenplatte (7) von wenigstens einer Zugstrebe (3, 4) des Sattelrahmens (2) überspannt ist.

4. Bremssattel (1) nach einem der vorgenannten Ansprüche, **dadurch gekennzeichnet, dass** der Sattelrahmen (2), der wenigstens eine Zugstrebe (3, 4) sowie die Gehäuseabdeckung (12) und einen domartigen Gehäuseabschnitt (25) aufweist, aus einem Flachmaterialhalbzeug zugeschnitten ist und anschließend umgeformt ist.

5. Bremssattel (1) nach einem der vorgenannten Ansprüche, **dadurch gekennzeichnet, dass** eine Grundplatte(33) der Bodenplatte (15) aus einem Flachmaterialhalbzeug zugeschnitten ist.

6. Bremssattel (1) nach Anspruch 5, **dadurch gekennzeichnet, dass** die Grundplatte(33) mit einem Lagerbock (33, 34) oder mehreren Lagerböcken (34, 35) zu der Bodenplatte (15) gefügt ist.

7. Bremssattel (1) nach einem der vorgenannten Ansprüche, **dadurch gekennzeichnet, dass** die Gehäuseschale (12') aus einem Flachmaterialhalbzeug zugeschnitten ist und anschließend umgeformt ist.

8. Bremssattel (1) nach Anspruch 1 bis 6, **dadurch gekennzeichnet, dass** die Gehäuseschale (12') aus einem Flachmaterialhalbzeug durch einen Walzprofilierungsprozess umgeformt ist und anschließend zugeschnitten ist.

9. Bremssattel (1) nach Anspruch 8, **dadurch gekennzeichnet, dass** das Flachmaterialhalbzeug ein Stahlhalbzeug ist.

10. Bremssattel (1) nach Anspruch 9, **dadurch gekennzeichnet, dass** das Stahlhalbzeug ein Coil oder ein Band oder eine Tafel oder eine Platine oder ein Tailored Blank ist.

11. Bremssattel (1) nach Anspruch 6, **dadurch gekennzeichnet, dass** der Lagerbock bzw. die Lagerböcke (34, 35) jeweils aus einem Stahlhalbzeug hergestellt ist/ sind.

12. Bremssattel (1) nach Anspruch 6, **dadurch gekennzeichnet, dass** der Lagerbock bzw. die Lagerböcke (34, 35) jeweils aus einem Stahlgusswerkstoff hergestellt ist/ sind.

13. Bremssattel (1) nach Anspruch 6, **dadurch gekennzeichnet, dass** die Grundplatte(33) mit dem einem Lagerbock (33, 34) oder mit den mehreren Lagerböcken (34, 35) zu der Bodenplatte (15) bzw. die Zwischenplatte (7), die Bodenplatte (15), die Gehäuseschale (12') sowie der Sattelrahmen (2) zu dem Bremssatte|(1) jeweils durch einen stoffschlüssigen Fügeprozess zusammengefügt werden.

14. Bremssattel (1) nach Anspruch 13, **dadurch gekennzeichnet, dass** der stoffschlüssige Fügeprozess ein Schweißprozess ist.

15. Bremssattel (1) nach Anspruch 14, **dadurch gekennzeichnet, dass** der Schweißprozess ein Laserschweißprozess ist.

16. Verfahren zur Herstellung eines Bremssattels (1), nach Anspruch 1 bis 15, **gekennzeichnet durch** folgende Verfahrensschritte:
a) Bereitstellen eines oder mehrerer Flachmaterialhalbzeuge,
b) Ausschneiden der Zwischenplatte (7) aus einem Flachmaterialhalbzeug,
c) Ausschneiden der Grundplatte(33) aus einem Flachmaterialhalbzeug und fügen der Grundplatte mit dem wenigstens einem Lagerbock (33, 34) zu der Bodenplatte
d) Ausschneiden eines Zuschnitts der Gehäuseschale (12') aus einem Flachmaterialhalbzeug und umformen des Zuschnitts zu der Gehäuseschale (12'),
e) Ausschneiden eines Zuschnitts des Sattelrahmens (2) aus einem Flachmaterialhalbzeug und Umformen des Zuschnitts zu dem Sattelrahmen (2) mit der Gehäuseabdeckung (12), die einstückig mit dem Sattelrahmen (2) ausgebildet ist,
f) Fügen der Zwischenplatte (7), der Bodenplatte (15), der Gehäuseschale (12') sowie des Sattelrahmens (2) zu dem Bremssattel (1).

17. Verfahren nach Anspruch 16, **dadurch gekennzeichnet, dass** in Schritt d) die Gehäuseschale (12') aus einem Flachmaterialhalbzeug durch einen Walzprofilierungsprozess umgeformt wird und anschließend zugeschnitten wird.

18. Scheibenbremse mit einem Bremssattel (1) nach Anspruch 1 bis 15.

## Claims

1. Brake calliper (1) for a disc brake, having a calliper frame (2) which is configured to extend over an edge of a brake disc and which has a housing to receive an application mechanism for application of the disc brake, **characterised in that**
a) the housing comprises a base plate (15), an intermediate plate (7), a housing shell (12') connecting the base plate (15) and the intermediate plate (7), and a housing cover (12),
wherein the intermediate plate (7) is cut from a flat stock semi-finished product and wherein
b) the calliper frame (2) is cut from a sheet metal and shaped, and the housing cover (12) is formed integrally with the calliper frame (2).

2. Brake calliper (1) according to claim 1, **characterised in that** the base plate (15), the intermediate plate (7), the housing shell (12') and the calliper frame (2) with the housing cover (12) are each configured as separate components which are joined together by means of a joining process.

3. Brake calliper (1) according to claim 1 or 2, **characterised in that** the intermediate plate (7) is spanned by at least one tie bar (3, 4) of the calliper frame (2).

4. Brake calliper (1) according to any of the preceding claims, **characterised in that** the calliper frame (2), which comprises at least one tie bar (3, 4) and the housing cover (12) and a dome-like housing portion (25), is cut from a flat stock semi-finished product and then shaped.

5. Brake calliper (1) according to any of the preceding claims, **characterised in that** a bed plate (33) of the base plate (15) is cut from a flat stock semi-finished product.

6. Brake calliper (1) according to claim 5, **characterised in that** the bed plate (33) with a bearing block (33, 34) or plurality of bearing blocks (34, 35) is joined to the base plate (15).

7. Brake calliper (1) according to any of the preceding claims, **characterised in that** the housing shell (12') is cut from a flat stock semi-finished product and then shaped.

8. Brake calliper (1) according to any of claims 1 to 6, **characterised in that** the housing shell (12') is shaped from a flat stock semi-finished product by a roll-forming process and then cut.

9. Brake calliper (1) according to claim 8, **characterised in that** the flat stock semi-finished product is a steel semi-finished product.

10. Brake calliper (1) according to claim 9, **characterised in that** the steel semi-finished product is a coil or a strip or a panel or a plate or a tailoured blank.

11. Brake calliper (1) according to claim 6, **characterised in that** the bearing block or bearing blocks (34, 25) is/are each made from a steel semi-finished product.

12. Brake calliper (1) according to claim 6, **characterised in that** the bearing block or bearing blocks (34, 25) is/are each made from a cast steel material.

13. Brake calliper (1) according to claim 6, **characterised in that** the bed plate (33) with the one bearing block (33, 34) or the plurality of bearing blocks (34, 35) is joined to the base plate (15), and/or the intermediate plate (7), the base plate (15), the housing shell 12') and the calliper frame (2) are respectively joined into the brake calliper (1) by an adhesive joining process.

14. Brake calliper (1) according to claim 13, **characterised in that** the adhesive joining process is a welding process.

15. Brake calliper (1) according to claim 14, **characterised in that** the welding process is a laser welding process.

16. Method for manufacturing a brake calliper (1) as claimed in claims 1 to 15, **characterised by** the following method steps:
a) the provision of one or more flat stock semi-finished products;
b) the cutting of the intermediate plate (7) from a flat stock semi-finished product;
c) the cutting of the bed plate (33) from a flat stock semi-finished product and the joining of the bed plate with the at least one bearing block (33, 34) to the base plate (15);
d) the cutting of a blank of the housing shell (12') from a flat stock semi-finished product and shaping of the blank into the housing shell (12');
e) the cutting of a blank of the calliper frame (2) from a flat stock semi-finished product and the shaping of the blank into the calliper frame (2) with the housing cover (12), which is integral with the calliper frame (2);
f) the joining of the intermediate plate (7), the base plate (15), the housing shell (12') and the calliper frame (2) into the brake calliper (1).

17. Method according to claim 16, **characterised in that** in step d) the housing shell (12') is shaped from a flat stock semi-finished product by a roll-forming process and then cut.

18. Disc brake with a brake calliper (1) according to any of claims 1 to 15.

## Revendications

1. Etrier (1) de frein pour un frein à disque, qui a un cadre (2) d'étrier, qui est conçu pour chevaucher un bord d'un disque de frein et qui a une enveloppe de réception d'un mécanisme de serrage pour serrer le frein à disque,
**caractérisé**
a) **en ce que** l'enveloppe a une plaque (15) de fond, une plaque (7) intermédiaire, une coque (12') reliant la plaque (15) de fond et la plaque (7) intermédiaire, ainsi qu'un recouvrement (12) de l'enveloppe,
la plaque (7) intermédiaire étant découpée dans un demi produit de matériau plat et dans lequel
b) le cadre (2) d'étrier est découpé et conformé dans une tôle et en ce que le recouvrement (12) de l'enveloppe est constitué d'une seule pièce avec le cadre (2) de l'étrier.

2. Etrier (1) de frein suivant la revendication 1,
**caractérisé en ce que** la plaque (15) de fond, la plaque (7) intermédiaire et la coque (12') de l'enveloppe, ainsi que le cadre (2) de l'étrier, avec le recouvrement (12) de l'enveloppe, sont conformés chacun sous la forme de pièces distinctes, qui sont assemblées entre elles par une opération d'assemblage.

3. Etrier (1) de frein suivant la revendication 1 ou 2,
**caractérisé en ce que** la plaque (7) intermédiaire est recouverte d'au moins un tirant (3, 4) du cadre (2) de l'étrier.

4. Etrier (1) de frein suivant l'une des revendications précédentes,
**caractérisé en ce que** le cadre (2) de l'étrier, qui a au moins un tirant (3, 4), ainsi que le recouvrement (12) de l'enveloppe et une partie (25) d'enveloppe de type en dôme, est découpé dans un demi produit de matériau plat et est ensuite conformé.

5. Etrier (1) de frein suivant l'une des revendications précédentes,
**caractérisé en ce qu'**une plaque (33) de base de la plaque (15) de fond est découpée dans un demi produit en matériau plat.

6. Etrier (1) de frein suivant la revendication 5,
**caractérisé en ce que** la plaque (33) de base est assemblée en la plaque (15) de fond par une selle (33, 34) d'appui ou par plusieurs selles (34, 35) d'appui.

7. Etrier (1) de frein suivant l'une des revendications précédentes,
**caractérisé en ce que** la coque (12') de l'enveloppe est découpée dans un demi produit de matériau plat et est ensuite conformée.

8. Etrier (1) de frein suivant la revendication 1 à 6,
**caractérisé en ce que** la coque (12') dé l'enveloppe est conformée à partir d'un demi produit en matériau plat par une opération de profilage par laminage et est ensuite découpée.

9. Etrier (1) de frein suivant la revendication 8,
**caractérisé en ce que** le demi produit en matériau plat est un demi produit en acier.

10. Etrier (1) de frein suivant la revendication 9,
**caractérisé en ce que** le demi produit en acier est une bobine ou une bande ou un panneau ou une platine ou une ébauche sur mesure.

11. Etrier (1) de frein suivant la revendication 6,
**caractérisé en ce que** la selle d'appui ou les selles (34, 35) d'appui est/sont fabriquée(s) à partir d'un demi produit en acier.

12. Etrier (1) de frein suivant la revendication 6,
**caractérisé en ce que** la selle d'appui ou les selles (34, 35) d'appui est/sont fabriquée(s) en un matériau en acier moulé.

13. Etrier (1) de frein suivant la revendication 6,
**caractérisé en ce que** la plaque (33) de base est assemblée par un processus d'assemblage à coopération de matière à la une selle (33, 34) d'appui ou aux plusieurs selles (34, 35) d'appui, en la plaque (15) de fond, ou la plaque (7) intermédiaire, la plaque (15) de fond, la coque (12') de l'enveloppe, ainsi que le cadre (2) de l'étrier sont assemblés en l'étrier (1) de frein par une opération d'assemblage à coopération de matière.

14. Etrier (1) de frein suivant la revendication 13,
**caractérisé en ce que** le processus d'assemblage à coopération de matière est un processus de soudage.

15. Etrier (1) de frein suivant la revendication 14, **caractérisé en ce que** le processus de soudage est un processus de soudage laser.

16. Procédé de fabrication d'un étrier (1) de frein suivant la revendication 1 à 15,
**caractérisé par** les stades de procédé suivants :
a) on se procure un ou plusieurs demi produits en matériau plat,
b) on découpe la plaque (7) intermédiaire dans un demi produit en matériau plat,
c) on découpe la plaque (33) de base dans un demi produit en matériau plat et on assemble la plaque de base à la au moins une selle (33, 34) d'appui en la plaque de fond,
d) on découpe un flan de la coque (12') de l'enveloppe en un demi produit en matériau plat et on conforme le flan en la coque (12') de l'enveloppe,
e) on découpe un flan du cadre (2) de l'étrier en un demi produit en matériau plat et on conforme le flan en le cadre (2) d'étrier avec le recouvrement (12) de l'enveloppe, qui est constitué d'une pièce avec le cadre (2) de l'étrier,
f) on assemble la plaque (7) intermédiaire, la plaque (15) de fond, la coque (12') de l'enveloppe ainsi que le cadre de l'étrier en l'étrier (1) de frein.

17. Procédé suivant la revendication 16,
**caractérisé en ce que**, dans le stade d), on conforme la coque (12') de l'enveloppe en un demi produit de matériau plat par une opération de profilage par laminage et on la découpe ensuite.

18. Frein à disque, ayant un étrier (1) de frein suivant l'une des revendications 1 à 15.
